# EUROPÄISCHE PATENTSCHRIFT

(11) **EP 2 409 859 B1**
(45) Veröffentlichungstag und Bekanntmachung des Hinweises auf die Patenterteilung: **28.09.2016**
(21) Anmeldenummer: 11166465.2
(22) Anmeldetag: 18.05.2011
(51) Int. Cl.: B60C 11/03, B60C 11/12

(54) **Fahrzeugluftreifen**
Pneumatic tyres for a vehicle
Pneus de véhicule

(30) Priorität: 19.07.2010 DE 102010036478
(43) Veröffentlichungstag der Anmeldung: 25.01.2012
(73) Patentinhaber: Continental Reifen Deutschland GmbH, 30165 Hannover (DE)
(72) Erfinder: Rittweger, Stefan, 30163, Hannover (DE); Fischer, Markus, 30823, Garbsen (DE); Behr, Ulrich, 30169, Hannover (DE); Gerhardt, Joachim, 30890, Barsinghausen (DE)
(74) Vertreter: Finger, Karsten

(56) Entgegenhaltungen:
- DE-A1-102006 058 086
- JP-A- 2009 067 344
- JP-A- 2010 095 221
- US-A- 2 056 131
- US-A- 4 723 585

## Beschreibung

Die Erfindung betrifft einen Fahrzeugluftreifen für PKW.

Bei Fahrzeugreifenprofilen für Personenkraftwagen gibt es im Allgemeinen einen Zielkonflikt zwischen einer Reduzierung des Rollwiderstandes und der verbesserten Leistungsfähigkeit beim Bremsen. Bei herkömmlichen Fahrzeugprofilen neigen die Profilblöcke dazu, beim Bremsen zu kippen. Das ist insbesondere bei lamellierten Blöcken der Fall. Der Kippeffekt der Profilblöcke bedeutet, dass die Profiloberfläche nicht mehr vollständig im Kontakt mit der Fahrbahn ist. Dadurch kann die Bremskraft des Reifenprofils reduziert sein. Um diesen negativen Effekt zu verringern, wird üblicherweise das Reifenprofil bzw. die einzelnen Profilblöcke steifer ausgelegt. Eine zu steife Auswirkung des Reifenprofils bedeutet jedoch eine Verschlechterung der Nässeperformance und ggf. auch Winterperformance. In der US 2 056 131 A, US 4 723 585 A, JP 2009 067344 A und JP 2010 095221 A sind bekannte Reifenprofile offenbart.

Der Erfindung liegt die Aufgabe zu Grunde, bei einem Fahrzeugluftreifen das Reifenprofil derart auszuführen, dass bei Brems- und Beschleunigungsvorgängen das Reifenprofil eine hohe Leistungsfähigkeit aufweist. Gleichzeitig soll ein geringer Rollwiderstand erzielt werden.

Gelöst wird die Aufgabe gemäß Anspruch 1.

Ein Vorteil des erfindungsgemäßen Reifenprofils besteht darin, dass das Reifenprofil relativ weich beim normalen Abrollen ist und sich hingegen bei Brems- oder Beschleunigungssituationen versteift. Durch die Versteifung des Reifenprofils in Bremssituationen zeichnet sich der Fahrzeugreifen durch einen relativ geringen Bremsweg aus. Der keilförmige Block mit der pfeilförmigen Spitze neigt sich bei einem Bremsvorgang mittig in die beiden benachbarten Profilblöcke hinein. Diese benachbarten Profilblöcke stützen sich jeweils an zwei seitlich stützenden Profilelementen ab, wodurch eine erhebliche Versteifung des Reifenprofils erzielt wird. Beim normalen Abrollen ist das Reifenprofil hingegen relativ weich, wodurch das Reifenprofil sich durch einen geringen Rollwiderstand auszeichnet.

Es ist vorgesehen, dass die Breite des Y-Förmigen Lamelleneinschnitt zwischen ca. 0,6 und 2 mm beträgt. Dadurch wird in Bremssituationen ein schneller Kontakt zwischen dem keilförmigen Block und den beiden benachbarten Profilblöcken erzielt.
Dadurch wird auch bei einer geringen Bremskraft eine Versteifung des Reifenprofils erreicht.

Es ist vorgesehen, dass der Abstand zwischen den benachbarten Profilblöcken und den seitlich stützenden Profilelementen jeweils maximal 5 mm beträgt.
Auf diese Weise wird eine sichere Abstützung der beiden benachbarten Profilblöcke erzielt.

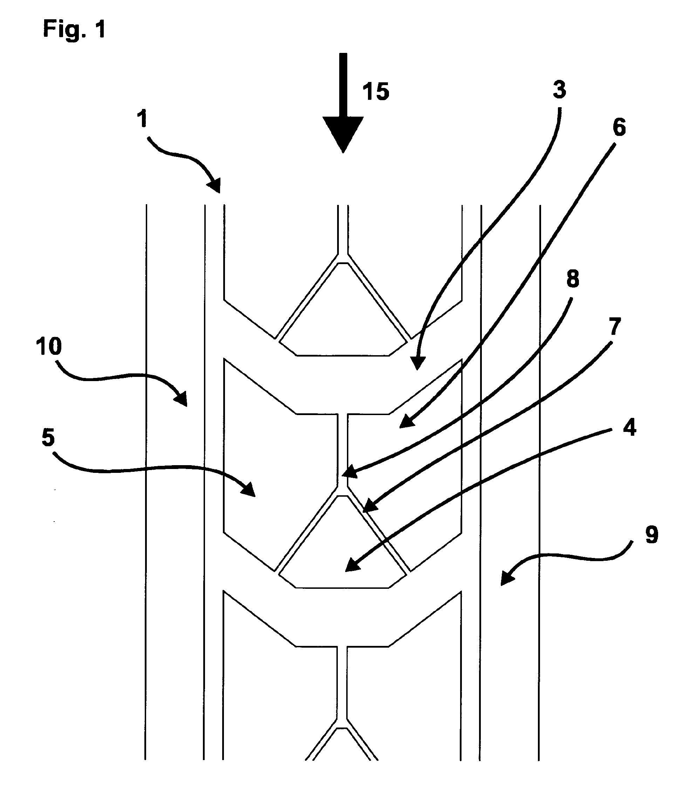

In einer weiteren vorteilhaften Weiterbildung der Erfindung ist vorgesehen, dass die keilförmige Spitze bei einem richtungsgebundenen Reifenprofil in Drehrichtung des Fahrzeugreifens angeordnet ist.
Dadurch wird bei einer Bremssituation effektiv eine Versteifung des Reifenprofils erreicht. Ein entsprechendes Ausführungsbeispiel ist in der Figur 1 gezeigt.

In einer weiteren vorteilhaften Weiterbildung der Erfindung ist vorgesehen, dass bei einem richtungsgebundenen Reifenprofil eine pfeilförmige Querrille die Profilblockgruppen aus keilförmigen und benachbarten Profilblöcken voneinander trennen.
Auf diese Weise kann Wasser, welches sich in diesen Querrillen angesammelt hat, einfach zu den Seiten hin abgeleitet werden.

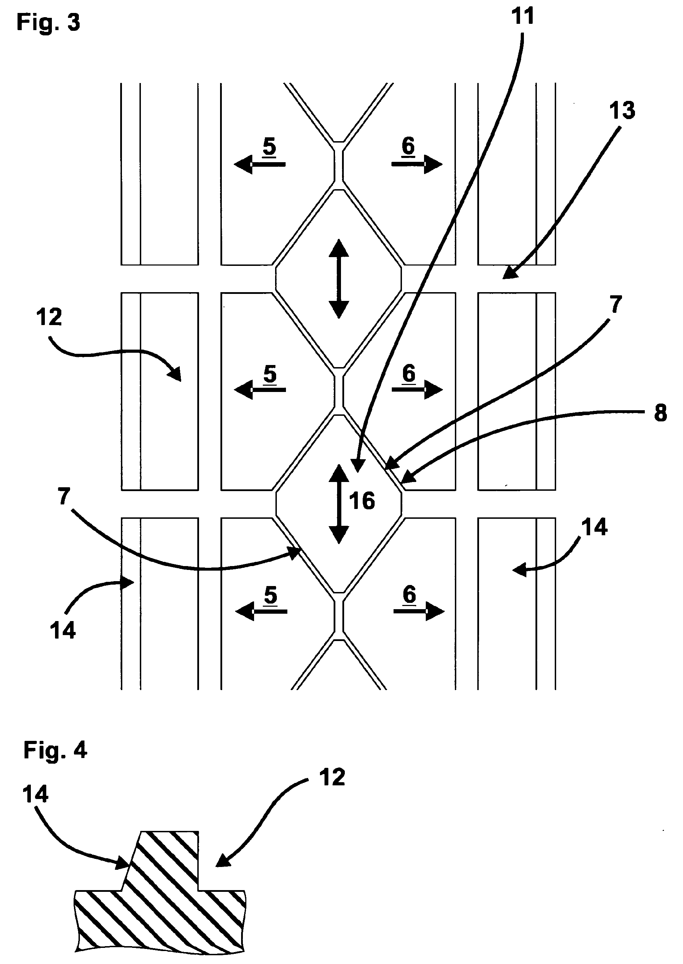

In einer weiteren vorteilhaften Weiterbildung der Erfindung ist vorgesehen, dass der keilförmige Profilblock in beide Drehrichtungen des Fahrzeugreifens jeweils eine pfeilförmige Spitze aufweist,
wobei die pfeilförmige Spitzen jeweils mittig in zwei benachbarte Profilblöcke hineinragen. Ein entsprechendes Ausführungsbeispiel ist in der Figur 3 gezeigt. Die entsprechende Weiterbildung hat den Vorteil, dass die Versteifung des Reifenprofils sowohl beim Abbremsen als auch beim Beschleunigen erfolgt.

Die seitlich stützenden Profilelemente sind in Form von einzelnen Stützblöcken ausgebildet , die durch Querrillen voneinander getrennt sind. Auf diese Weise kann Wasser, welches sich in den Quer- oder in den Umfangsrillen angesammelt hat, besser zu den Seiten hin abgeleitet werden.

Es ist vorgesehen, dass die Stützblöcke eine seitlich angeordnete geneigte Flanke aufweisen. Auf diese Weise wird die Stützwirkung der Stützblöcke erheblich verstärkt.

Anhand eines Ausführungsbeispiels soll die Erfindung erläutert werden. Es zeigen:
Fig. 1: ein Ausführungsbeispiel eines erfindungsgemäßen Reifenprofils
Fig. 2: das Reifenprofil in der Figur 1 bei einem Bremsvorgang
Fig. 3: ein weiteres Ausführungsbeispiel
Fig. 4: einen Stützblock in einer Schnittansicht.

Die Fig. 1 zeigt den Laufstreifen 1 des erfindungsgemäßen Fahrzeugluftreifens in der Aufsicht.
In der Figur ist lediglich ein Ausschnitt des Reifenprofils zu sehen. Der keilförmige Profilblock 4 ist mittig zwischen zwei benachbarten Profilblöcken 5 und 6 angeordnet und ragt mit seiner pfeilförmigen Spitze 7 in diese benachbarten Profilblöcke 5 und 6 hinein. Alle drei Profilblöcke sind durch einen Y-förmigen Lamelleneinschnitt 8 voneinander getrennt. Die drei Profilblöcke 4, 5 und 6 bilden eine Gruppe von Profilblöcken, die durch eine pfeilförmige Querrille 3 voneinander getrennt sind. Auf der linken und auf der rechten Seite der beiden benachbarten Profilblöcke 5 und 6 ist jeweils eine durchgehende Stützrippe 9 und 10 angeordnet. Die Umfangsrichtung des Fahrzeugreifens ist mit dem Pfeil 15 angezeigt.

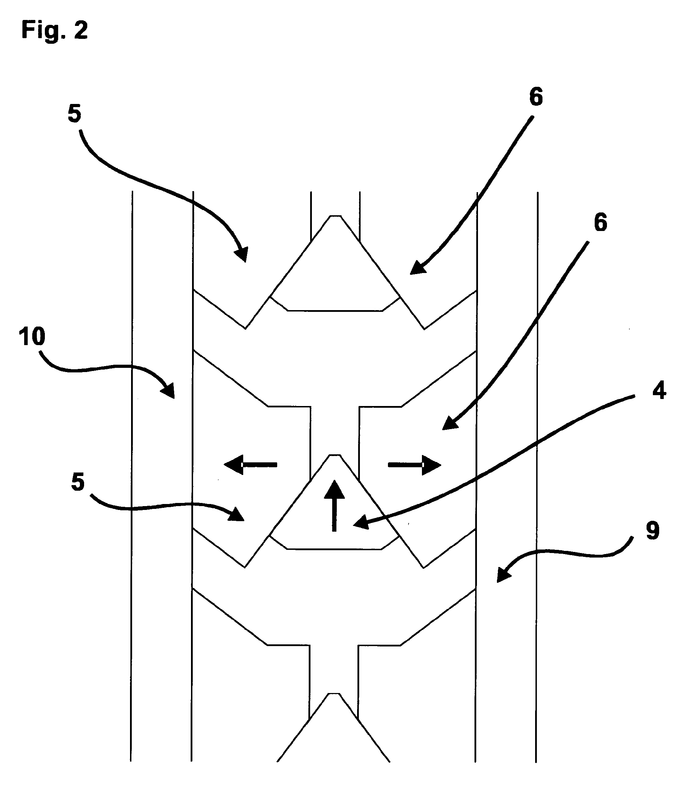

Die Figur 2 zeigt das Reifenprofil in der Figur 1 bei einem Bremsvorgang, wobei die Verschiebungen der Profilblöcke verstärkt dargestellt sind. Der keilförmige Profilblock 4 schiebt sich bei einem Bremsvorgang zwischen die beiden benachbarten Profilblöcke 5 und 6 und drückt diese beide seitlich auseinander. Die Profilblöcke 5 und 6 treten dabei in Kontakt mit den beiden benachbarten durchgehenden Stützrippen 9 und 10. Dadurch werden die Profilblöcke 5 und 6 gegen eine weitere Verschiebung gestützt bzw. blockiert. Das bedeutet, dass die einzelnen Profilblöcke nicht weiter auseinander driften können. Der Vorgang bewirkt dadurch eine Versteifung des Reifenprofils.

Die Figur 3 zeigt ein weiteres Ausführungsbeispiel. Der keilförmige Profilblock 11 weist zwei gegenüber liegende pfeilförmige Spitzen 7 auf Oberhalb und unterhalb des keilförmigen Profilblockes sind jeweils zwei benachbarte Profilblöcke 5 und 6 angeordnet. Der Pfeil 16 gibt die beiden Bewegungsrichtungen an, in die sich der keilförmige Profilblock 11 beim Bremsen oder beim Beschleunigen bewegen kann. In beiden Fällen drückt der keilförmige Profilblock 11 die beiden benachbarten Profilblöcke 5 und 6 seitlich auseinander. Dabei stützen sich die beiden benachbarten Profilblöcke jeweils links und rechts an einem stützendem Profilelement 12 in Form eines Stützblockes ab. Die Stützblöcke 12 sind in Umfangsrichtung durch entsprechende Querrillen 13 voneinander getrennt. Außerdem weisen die Stützblöcke geneigte Flanken 14 auf.

Die Figur 4 zeigt einen Stützblock 12 in einer Schnittansicht. Der Stützblock 12 weist an seiner linken Seite, gegenüberliegend von dem Profilblock 5 in der Fig. 3, eine geneigte Flanke 14 auf, wodurch die Stützwirkung des Stützblockes erheblich unterstützt wird.

### Bezugszeichenliste

- 1: Laufstreifen mit Reifenprofil
- 2: Umfangsrille
- 3: pfeilförmige Querrille
- 4: Keilförmiger Profilblock
- 5: linker benachbarter Profilblock
- 6: rechter benachbarter Profilblock
- 7: pfeilförmige Spitze des keilförmigen Profilblockes
- 8: Y-Förmiger Lamelleneinschnitt
- 9: stützendes Profilelement in Form einer durchgehenden Stützrippe
- 10: stützendes Profilelement in Form einer durchgehenden Stützrippe
- 11: Keilförmiger Profilblock mit zwei gegenüberliegenden pfeilförmigen Spitzen
- 12: stützendes Profilelement in Form eines Stützblockes
- 13: Querrille zwischen den Stützblöcken
- 14: Geneigte Flanke des Stützblockes
- 15: Umfangsrichtung
- 16: Bewegungsrichtung

## Patentansprüche

1. Fahrzeugluftreifen für Personenkraftfahrzeuge mit einem Laufstreifen (1), Seitenwänden und einem Reifenprofil mit einzelnen Profilblöcken,
wobei die Profilblöcke untereinander durch eine Anzahl von in Umfangsrichtung umlaufenden Umfangsrillen und durch eine Vielzahl von Querrillen (3) getrennt sind,
wobei ein keilförmiger Profilblock (4, 11) im Wesentlichen symmetrisch zu zwei benachbarten Profilblöcken (5, 6) angeordnet ist,
wobei der keilförmige Profilblock (4, 11) mit der pfeilförmigen Spitze (7) mittig in die beiden benachbarten Profilblöcke (5, 6) hineinragt,
wobei der keilförmige Profilblock (4, 11) und die beiden benachbarten Profilblöcke (5, 6) über einen in Umfangsrichtung des Fahrzeugreifens Y-förmigen Lamelleneinschnitt (8) voneinander getrennt sind,
**dadurch gekennzeichnet, dass**
der keilförmige Profilblock (4, 11) bei einem Brems- oder Beschleunigungsvorganges mit den beiden benachbarten Profilblöcken (5, 6) in Kontakt tritt und diese benachbarten Profilblöcken (5, 6) quer zur Umfangsrichtung auseinanderdrückt,
wodurch die benachbarten Profilblöcke (5, 6) sich jeweils an zwei seitlich stützenden Profilelementen (9, 10, 12) abstützen und dadurch insgesamt eine Versteifung des Reifenprofils bewirkt wird,
wobei die Breite des Y-Förmigen Lamelleneinschnitt (8) zwischen ca. 0,6 und 2 mm beträgt,
wobei der Abstand zwischen den benachbarten Profilblöcken (5, 6) und den seitlich stützenden Profilelementen (9, 10, 12) jeweils maximal 5 mm beträgt, wobei die seitlich stützenden Profilelemente in Form einzelner Stützblöcke (12) ausgebiltdet sind, die durh Querrillen (13) voneinander getrennt sind und
wobei die Stützblöcke (12) eine seitlich angeordnete geneigte Flanke (14) aufweisen.

2. Fahrzeugluftreifen nach einem der vorhergehenden Ansprüche
**dadurch gekennzeichnet, dass**
die zwei seitlich stützenden Profilelemente (9, 10) in Form von durchgehende Stützrippen ausgebildet sind.

3. Fahrzeugluftreifen nach einem der vorhergehenden Ansprüche
**dadurch gekennzeichnet, dass**
die keilförmige Spitze (7) bei einem richtungsgebundenen Reifenprofil in Drehrichtung des Fahrzeugreifens angeordnet ist.

4. Fahrzeugluftreifen nach einem der vorhergehenden Ansprüche
**dadurch gekennzeichnet, dass**
bei einem richtungsgebundenen Reifenprofil eine pfeilförmige Querrille (3) die Profilblockgruppen aus keilförmigen (4) und benachbarten Profilblöcken (5, 6) voneinander trennen.

5. Fahrzeugluftreifen nach einem der vorhergehenden Ansprüche
**dadurch gekennzeichnet, dass**
der keilförmige Profilblock (4) in beide Drehrichtungen des Fahrzeugreifens jeweils eine pfeilförmige Spitze (7) aufweist,
wobei die pfeilförmige Spitzen (7) jeweils mittig in zwei benachbarte Profilblöcke (5, 6) hineinragen.

## Claims

1. Pneumatic vehicle tyre for passenger cars, with a tread (1), sidewalls and a tyre tread pattern comprising individual tread bars,
wherein the tread bars are separated from one another by a number of circumferential grooves running around in the circumferential direction and by a multiplicity of transverse grooves (3), wherein a wedge-shaped tread bar (4, 11) is arranged substantially symmetrically to two adjacent tread bars (5, 6),
wherein the wedge-shaped tread bar (4, 11) projects with the arrow-shaped point (7) centrally into the adjacent tread bars (5, 6),
wherein the wedge-shaped tread bar (4, 11) and the two adjacent tread bars (5, 6) are separated from one another by way of a Y-shaped sipe (8) in the circumferential direction of the vehicle tyre,
**characterized in that**
during a braking or accelerating operation, the wedge-shaped tread bar (4, 11) comes into contact with the two adjacent tread bars (5, 6) and pushes these adjacent tread bars (5, 6) apart transversely to the circumferential direction,
whereby the adjacent tread bars (5, 6) are supported in each case on two laterally supporting tread elements (9, 10, 12) and a stiffening of the tyre tread pattern is thereby brought about, wherein the width of the Y-shaped sipe (8) is between about 0.6 and 2 mm,
wherein the distance between the adjacent tread bars (5, 6) and the laterally supporting tread elements (9, 10, 12) is in each case a maximum of 5 mm,
wherein the laterally supporting tread elements take the form of individual supporting bars (12), which are separated from one another by transverse grooves (13), and
wherein the supporting bars (12) have a laterally arranged sloping flank (14).

2. Pneumatic vehicle tyre according to one of the preceding claims,
**characterized in that**
the two laterally supporting tread elements (9, 10) take the form of continuous supporting ribs.

3. Pneumatic vehicle tyre according to one of the preceding claims,
**characterized in that**
in the case of a directional tyre tread pattern, the wedge-shaped point (7) is arranged in the direction of rotation of the vehicle tyre.

4. Pneumatic vehicle tyre according to one of the preceding claims,
**characterized in that**
in the case of a directional tyre tread pattern, an arrow-shaped transverse groove (3) separates the groups of tread bars comprising wedge-shaped tread bars (4) and adjacent tread bars (5, 6) from one another.

5. Pneumatic vehicle tyre according to one of the preceding claims,
**characterized in that**
the wedge-shaped tread bar (4) has an arrow-shaped point (7) in each of both directions of rotation of the vehicle tyre,
wherein the arrow-shaped points (7) project in each case centrally into two adjacent tread bars (5, 6).

## Revendications

1. Bandage pneumatique pour roue de voiture automobile, présentant une bande de roulement (1), des parois latérales et un profil de bandage de roue présentant des blocs profilés distincts,
les blocs profilés étant séparés les uns des autres par plusieurs rainures périphériques qui s'étendent dans la direction périphérique et par plusieurs rainures transversales (3),
un bloc profilé (4, 11) en forme de biseau étant disposé essentiellement symétriquement par rapport à deux blocs profilés (5, 6) voisins,
le bloc profilé (4, 11) en forme de biseau pénétrant par la pointe (7) en forme de flèche au milieu des deux blocs profilés (5, 6) voisins,
le bloc profilé (4, 11) en forme de biseau et les deux blocs profilés (5, 6) voisins étant séparés les uns des autres par une entaille (8) en lamelle présentant la forme d'un Y dans la direction périphérique du bandage pour roue de véhicule,
**caractérisé en ce que**
lors d'une opération de freinage ou d'accélération, le bloc profilé (4, 11) en forme de biseau entre en contact avec les deux blocs profilés (5, 6) voisins et écartent l'un de l'autre ces blocs profilés (5, 6) voisins transversalement par rapport à la direction périphérique,
**en ce que** les blocs profilés (5, 6) voisins sont soutenus chacun sur des éléments profilés latéraux d'appui (9, 10, 12), pour ainsi entraîner une rigidification globale du profil du bandage de roue,
**en ce que** la largeur de l'entaille (8) en lamelle en forme de Y est comprise entre 0,6 et 2 mm,
**en ce que** la distance entre les blocs profilés (5, 6) voisins et les éléments profilés (9, 10, 12) qui les soutiennent latéralement est d'au plus 5 mm,
**en ce que** les éléments profilés de soutien latéral présentent la forme de blocs distincts de soutien (12) séparés les uns des autres par des rainures transversales (13) et
**en ce que** les blocs de soutien (12) présentent un flanc (14) latéral incliné.

2. Bandage pneumatique pour roue de véhicule selon l'une des revendications précédentes, **caractérisé en ce que** les éléments profilés (9, 10) de soutien latéral présentent la forme de nervures continues de soutien.

3. Bandage pneumatique pour roue de véhicule selon l'une des revendications précédentes, **caractérisé en ce que** lorsque le profil du bandage de roue dépend de la direction, la pointe (7) en forme de biseau est disposée dans la direction de rotation du bandage de roue de véhicule.

4. Bandage pneumatique pour roue de véhicule selon l'une des revendications précédentes, **caractérisé en ce que** lorsque le profil du bandage de roue dépend de la direction, une nervure transversale (3) en forme de flèche sépare les groupes de blocs profilés en blocs profilés (4) en forme de biseau et en blocs profilés (5, 6) voisins.

5. Bandage pneumatique pour roue de véhicule selon l'une des revendications précédentes, **caractérisé en ce que** le bloc profilé (4) en forme de biseau présente une pointe (7) en forme de flèche dans les deux sens de rotation du bandage de roue de véhicule, les pointes (7) en forme de flèche pénétrant au milieu dans deux blocs profilés (5, 6) voisins.
